# EUROPEAN PATENT APPLICATION

(11) **EP 2 165 602 A1**
(43) Date of publication of application: **24.03.2010**
(21) Application number: 08164518.6
(22) Date of filing: 17.09.2008
(51) Int. Cl.: A01M 29/00

(54) **Bird repelling device**

(71) Applicant: 3M Innovative Properties Company, St. Paul MN 55144-1000 (US)
(72) Inventor: Peters, Juergen, 47661 Issum (DE)
(74) Representative: Wilhelm, Stefan

(57) **Abstract**

A device (100) for repelling birds that can be wound-up to form a roll (150) for transporting or storing the device, the device comprising a flexible sheet having an upper surface and opposite thereto a lower surface, a length, a width and a plane made up by its width and length.
The sheet further comprises a bird-repelling member (20) comprising a plurality of projections, the bird-repelling member being attached to the sheet such that the bird-repelling member can be brought into a position wherein its projections are within the plane of the sheet or parallel to it and wherein the bird-repelling member can be brought into a position where the majority of its projections are perpendicular to the plane of the sheet.

## Description

### Field

This disclosure relates generally to devices for preventing birds from landing or perching on structures, elongated or round surfaces, in particular parts of buildings.

### Background Art

The presence of birds on surfaces, for examples of buildings, telecommunication devices or equipment for playgrounds is often undesirable. Bird droppings attract insects and provide a fertile bed for bacteria which may present a significant health hazard. Furthermore bird droppings may be acidic and lead to corrosion of building materials.

The use of a plurality of pointed objects, such as spikes and the like, mounted on surfaces where it is desired to repel birds has been known and is described, for example, in US Patent Nos. 5,433,029 and 5,253,444. Such bird repellent devices typically comprise a metal base having a plurality of upwardly projecting wires and spikes. Such bird repellent devices typically have to be assembled on the desired surface, typically in a way that the base is installed first and a structure comprising pointed objects is then mounted on to the base. These devices although efficient in repelling birds are cumbersome to transport, to store, or to assemble.

Therefore, there has been a need for bird repelling devices that can be easily stored, transported, assembled and/or installed.

### Summary

In the following there is provide a device for repelling birds comprising a flexible sheet having an upper surface and opposite thereto a lower surface, a length, a width and a plane defined by its length and width. The sheet further comprising a plurality of projections separated by a plurality of cut-out sections, wherein when the device is flat, the projections lie substantially within the plane of the sheet or substantially parallel to it and wherein when the device is bent out of its flat position in the width direction along the length of the sheet, the projections project at an angle relative to the plane of the sheet in its flat position.

In a further aspect there is provided a device for repelling birds comprising a flexible sheet having an upper surface and opposite thereto a lower surface, a length, a width and a plane defined by its width and length. The sheet further containing a bird-repelling member comprising a plurality of projections, the bird-repelling member being moveably joined to the sheet such that the bird-repelling member can be moved into a position wherein at least a fraction of its projections are perpendicular to the plane of the sheet from a position wherein its projections are within the plane of the sheet or parallel to it.

In a further aspect there is provided a method of storing a device as described above comprising bringing the projections in a position within the plane of the sheet or parallel to it, and winding up the sheet to form a roll.

### Brief Description of Figures

Figure 1 is three-dimensional view of a bird repellent device according to the invention containing a row of diamond-shaped cut-outs. The device is shown flat.
Figure 2 is a three-dimensional view of the device of figure 1 wound-up into a roll.
Figure 3 is a three-dimensional view of the device of figure 1 in its unwound position with the sections between the cut-outs projecting upwards (bird-repelling position or upright position).
Figure 4 is a three-dimensional view of the device of figure 3 affixed to a round external surface (represented by a wooden pole).
Figure 5 is a three-dimensional view of a bird-repelling member comprising a row of spikes.
Figure 6 is a three-dimensional view of a further bird repelling device wherein the bird-repelling member comprises an array of triangles.

### Detailed Description

Before any embodiments of the invention are explained in detail, it is to be understood that the invention is not limited in its application to the details of construction and the arrangement of components set forth in the following description. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items, while the use of "consisting" is meant to be limiting. The use of "a" or "an" is meant to encompass "one or more". Any numerical range recited herein includes all values from the lower value to the upper value.

Provided herein are bird repellent devices containing a bird-repelling member moveably joined to a flexible sheet. The devices are adapted to take in several positions. The devices can be wound-up into a roll, for example, for storage and/or transport, wherein the bird-repelling member of the device lies within the plane of the flexible sheet or parallel to it. This position is referred to herein as the "wound-up position" or "storage position" of the device. The wound-up device can also be unwound with its bird-repelling member still being within the plane of the flexible sheet or parallel to it. This position is referred to herein as "flat position". Furthermore, the device can take up a position where it is unwound but where its bird-repelling member projects upwards, (i.e. a direction perpendicular or substantially perpendicular to the lower surface of the device, wherein the lower surface of the device is the surface which is to be attached to the structure which is to be protected from birds).
This position is referred to herein as "bird-repelling position" or "upright position".

The devices comprise of at least one flexible sheet. The sheet has a length, a thickness, a width, a plane defined by its length and width. The length of the sheet is at least equal to its width but preferably it is greater than its width. The width of the sheet is equal to or greater than its thickness.

The sheet itself is sufficiently flexible such that it can be wound-up into a roll along its length. Typically, the sheet can be wound up and unwound by hand without help of any machinery or special equipment. Typically, the sheet is flexible enough such that it can be wrapped around a rod having a diameter of 10 cm. Therefore, the sheet may be made of one or more flexible material(s), such as for example plastics (e.g. polymeric materials) or metal foils. Typical materials that may be used to make the sheet include polymers, homopolymers, copolymers or blends thereof, for example but not limited thereto, poly vinyl chlorides, poly esters, flouropolymers, poly acetates, poly olefins (such as for example, poly ethylenes, poly propylenes and the like) including blends or copolymers thereof but also including metal foils. The flexible sheet can have a layered structure, comprising one or more layers of the same or different materials. The layer may be made of a homogeneous material or a composite material. The layers may be joined to each other for example by adhesion or by lamination of by a combination thereof.

In some embodiments the flexible sheet comprises an adhesive tape. Adhesive tapes typically contain a layer of an adhesive material between a layer of a release liner material and a layer of a backing material. The release liner covers the adhesive layer before it is attached to a surface and the backing provides stiffness, strength and/or flexibility to the tape depending on which property is desired. The adhesives may be essentially solvent-free or water-free adhesives, or solvent- or water containing adhesives, including for example adhesive dispersions or solutions. Specific adhesives include acrylate-based adhesives, synthetic or natural rubber-based adhesives including for example butyl rubber based adhesives (including, for example polyisobutylene based rubbers, isoprene-isobutylene based rubbers and the like), nitrile rubber based adhesives (including for example acrylonitrile-butadiene polymers and the like) polyurethane based adhesives etc. In some embodiments the adhesives are room-temperature curable and/or moisture-curable rubber based and/or polyurethane-based adhesives and/or acrylate based adhesives. The adhesive layer in such tapes is typically covered on one side by a layer of a releasable liner material and on the opposite site by a layer of a backing material. Releasable liner materials are conventional materials used in the adhesive tape industry which can be separated from the adhesive layer without substantially disrupting the adhesive layer. Release liner materials include, for example, kraft papers, glassines, parchments, clay coated kraft papers, and films having a suitable undercoating for release coating hold-out. The release coating may be any of the known materials used for their release properties for adhesives, including for example silicones and modified silicones (including for example silicone copolymers or silicone non-silicone blends), polyethylene, fluoropolymers, fluorocarbons and the like. The backing may comprise any material commonly used for backings of tapes including, for example, paper layer(s) or films including polyethylene films, polypropylene films, polyester films, polyethylene-coated papers, polypropylene-coated papers, kraft papers and non-woven materials.

The adhesives tapes may further contain conventional additives, such as, for example, fillers, anti-oxidants, flame retardants, pigments plasticizers and the like, as known in the art. Typical adhesives and additives are described for example in Handbook of Pressure Sensitive Adhesive Technology, Donatas Satas (ed.) 2nd Ed., Van Nostrand Reinhold, New York, NY, 1989, incorporated herein by reference.

The sheet has a sufficient thickness to provide stability of the device but still allowing the sheet to be easily wound up into a roll. Typically, the sheet has a thickness of from 100 µm to 10 cm or from about 150 µm to about 5 cm, or from about 200 µm to about 2 cm.

In some embodiments, the flexible sheet is made of a low-cost material. In some embodiments, the sheet is made of a weather-resistant and, in some embodiments, the sheet is made of a UV-resistant material.

The device further contains one or more bird-repelling members. The bird repelling member comprises a plurality of projections having sharpened, narrowed or pointed ends. The ends of the projections are dimensioned and/or shaped such that birds cannot land or perch on them. The projections may be shaped and/or dimensioned such that they repel specific bird species but not others. Typically, bird species that are desirably repelled include pigeons, crows, and/or magpies. Also included are birds of prey. The projections can take any forms or shapes that meet the above requirements. Typical forms include but are not limited to spikes, prongs, triangles, pyramids, truncated pyramids and the like including a combination thereof and including a series of spikes, prongs, triangles, pyramids, truncated pyramids and a combination thereof having a common base.

The projections are arranged at an appropriate distance from each other and in sufficient numbers to prevent birds from landing and/or perching on the projections and/or the spaces between and/or next them. The projections may be arranged in a regular pattern, meaning one or multiple repeating patterns or in an irregular pattern, meaning arranged at random. Preferably the projections are arranged in a regular pattern, preferably next to each other forming a straight line, or multiple straight, parallel or crossing lines. Such an arrangement facilitates winding up of the device into a roll.

The bird-repellent member may be made of the same material or a different material than the flexible sheet. The bird-repelling member may be rigid or elastic. Suitable materials include plastics, glass, wood, metal or combinations thereof.

The bird-repellent member is moveably joined to the flexible sheet. The bird-repelling member can be moved into a position substantially parallel to the plane of the flexible sheet or substantially within the plane of the sheet (flat position or wound-up position) and into a position which is angular, preferably substantially perpendicular thereto (upright position or bird-repelling position). This means the bird-repellent members can be moved upwards out of the plane of the sheet (its flat position) to take up the bird-repelling position where the projections of the bird-repelling members, or at least a fraction thereof, preferably the majority thereof are in a angular (i. e. at an angle greater than 30°, preferably greater than 45°, and up to 90°), preferably substantially perpendicular position relative to the plane of the sheet in the flat position. Depending on how the bird-repellent device is constructed, the bird-repellent member may not lie precisely within or parallel to the plane of the device when it is unwound and placed in the "flat position." Therefore, as used herein, when the bird-repellent member is in the "flat position" projections are "substantially within the plane of the sheet or parallel to it" if the projections form an angle of from 0° to no greater than 30° relative to the plane of the sheet, e.g., no greater than 15°, or even no greater than 5°. Similarly, when placed in the "bird-repelling position", projections may not be precisely perpendicular to the plane (i.e. not precisely at an angle of 90° relative to the plane). Therefore, as used herein, a projection is "substantially perpendicular" if the projection forms an angle of at least 75° relative to the plane, e.g., at least 80°, or even at least 85°.

The bird repellent member is moveably joined to the sheet, for example it may be foldably joined (for example by thinned out sections or lines or by adhesive tapes), hinged, pivotally joined or a combination thereof.

The device may be configured such that the bird-repelling member can be fixed in its upright position, i.e. in the bird-repelling position. This can be achieved differently. For example the device may be fixed to the surface such that it is kept in its upright position, for example, by mechanical or chemical fixation. The device is kept in this position by the forces exerted through the fixation. For mechanical fixation, the device may be equipped with, for example but not limited to, hooks and loops, click-in mechanisms, clips, clamps, straps and the like such that the upright position of the bird repelling member is secured and maintained. Chemical fixation includes the use of adhesives, such as pressure-activated adhesives, moisture-activated adhesives or heat-activated adhesives. The device can also be kept in the upright position by securing it onto the structure which is to be protected from birds such that the device is kept in its upright position (for example by fixing the device onto the structure by putting the device under compression or tension). Preferably, the device can be brought into the bird-repelling position reversibly. This means the bird-repelling member can be folded back into the "flat position", for example, for winding it up and storing it again.

The device can be brought into the "flat position" by moving the bird-repelling member back into the plane of the sheet. In the "flat position" the projections of the bird-repelling member are in a position parallel or substantially parallel to the plane of the sheet.

From the "flat position" the device can be brought into the "wound-up position" by winding it up along the length of the sheet into a roll.

The bird-repelling member may be an integral part of the flexible sheet or it may be a separate part thereof. When being an integral part of the flexible sheet, the bird-repelling member is a part of the flexible sheet. In such an embodiment the flexible sheet is configured such that sections of the sheet form pointed projections when the device is put under pressure, e.g. folded, pushed together or compressed. This can be achieved, for example, by providing a flexible sheet containing a plurality of cut-outs that are shaped such that the sections adjacent to the cut-outs project when the sheet is folded or pushed together along its width. These sections between the cut-outs form the bird-repelling member as described above. A typical configuration by which projections emerge when the sheet is folded is a series of diamond-shaped cut-outs, typically arranged in a straight line with non cut-out sections between the diamonds. Folding of the sheet can be facilitated by providing the sheet with incisions which serve as folding lines along which the sheet can be folded for the bird-repelling member to emerge. When the pressure is released, the sheet can be folded back into the "flat position" such that the projections lie within the plane of the sheet or parallel to it.

The device can be affixed to an external structure. The external structure may be flat, even, uneven or round. Fixation may be achieved for example but not limited to mechanical or chemical fixation. Mechanical fixation can be achieved by using nails, rivets, nuts and bolds, clamps, springs, straps, ties and the like. Chemical fixation can be achieved by welding if appropriate or more easily by using adhesives, including pressure-sensitive adhesives, moisture activated adhesives, or temperature activated adhesives. Therefore, the bird-repelling device may contain one or more adhesives. The adhesives may cover all or only parts of the lower surface of the device, i.e. the surface facing the external structure onto which the device is to be attached. The adhesive material is preferably a pressure sensitive material. Pressure sensitive adhesives are those which have sufficient tackiness to provide an adhesive bond by applying finger tip pressure, and are also referred to herein as pressure-activated adhesives. The adhesive materials are preferably covered by a release liner before the device is affixed to the surface. The release liner is removed prior to affixing the device to the surface. Typical commercial adhesives or adhesives tapes, for example double-sided adhesive tapes with release liners may be used. Such adhesives are available, for example, from 3M Company St. Paul, MN, USA, under the trade designation SCOTCH WELD Tapes.

The device can be affixed to any surface or structure which is desired to be protected from birds. Typical surface include roofs, windows, window sills, balconies, sets of swings and the like.

The device can be cut into the desired length by common cutting equipments. To facilitate cutting the device, the device may comprise cutting aids, for example perforations or thinned out sections along which the device may be cut.

Particular embodiments of the devices provided herewith will now be described with reference to the figures.

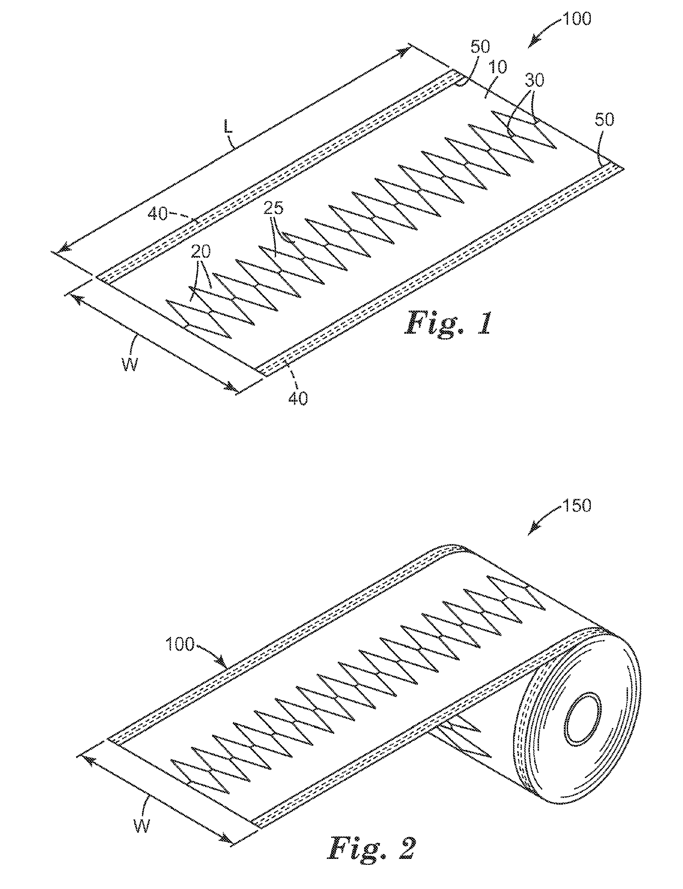

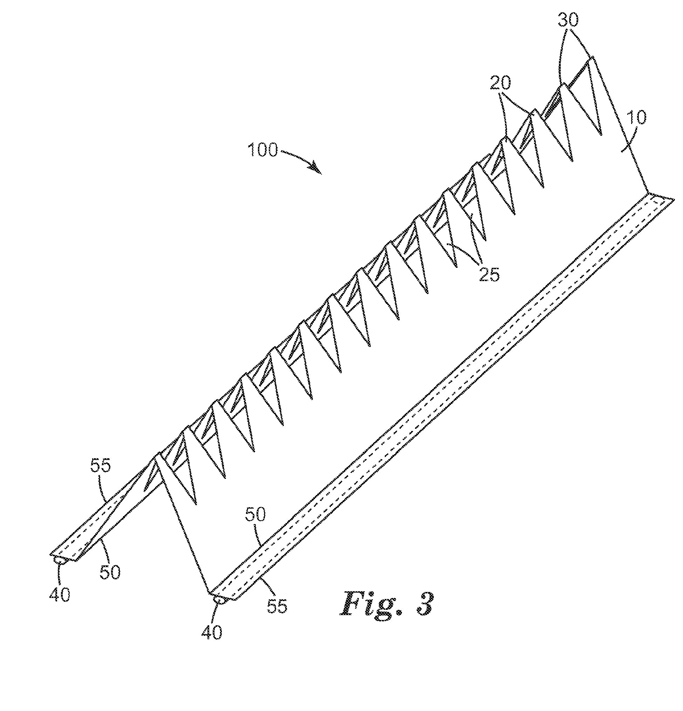

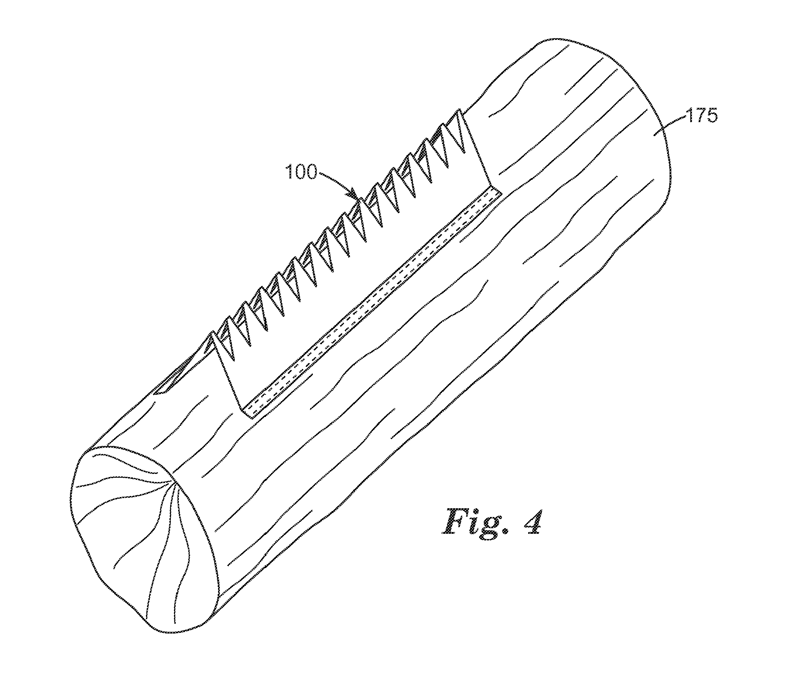

Figure 1 represents a bird repellent device (100) with a flexible sheet (10) containing integral bird repelling members (20) made up be sections of the sheet separated by a series of diamond-shaped cut-outs (25). Figure 1 shows the device in the "flat position" viewed from top. The diamond-shaped cut-outs are arranged in a straight line in the middle of the sheet (along the length of the sheet (L)). The sheet contains at its upper surface in its middle between the cut-outs a linear incision along its length (referred to in the following as the "central incision" (30)). This central line is deep enough to facilitate folding the sheet along this line but not deep enough that the sheet breaks when being folded. The sheet further contains at its lower plane (the surface facing the structure onto which the device is to be adhered) on each side a strip of an adhesive (40) (indicated by two dotted parallel lines on each side of the sheet). The sheet further contains on each sides of its lower plane a further linear incision (indicated by the continuous lines parallel to the doted lines representing the adhesive), referred to in the following as "lateral incisions" (50). Like the central incision on the upper plane, the lateral incisions on the lower surface are deep enough to facilitate folding but not deep enough for the sheet to break upon folding. The device (100) can be wound up from its "flat position" along its length to form roll (150) as shown in figure 2. The device is typically stored or transported in this "wound-up position". For using the device as a bird-repellent the roll is unwound. After being unwound, the sheet is folded up by pushing its sides towards each other (folding the sheet it along its width (W) (see figure 2)) such that the sections between the diamond-shaped cut-outs (the bird repelling member) emerge as upwardly facing projections as shown in figure 3. The sheet (10) is then folded again along the two lateral incisions (50) to provide a foot (55) for securing the device (100) on the desired structure. The device shown in figures 1 to 3 allows fixation on flat, even, uneven and round structures (as shown in figure 4 where a round surface is represented by a wooden log (175)). Fixation onto a structure is achieved in this embodiment by the adhesive stripes (40) on the lower surface of the sheet (after removing the optional releasable liner covering the adhesive (not shown)).

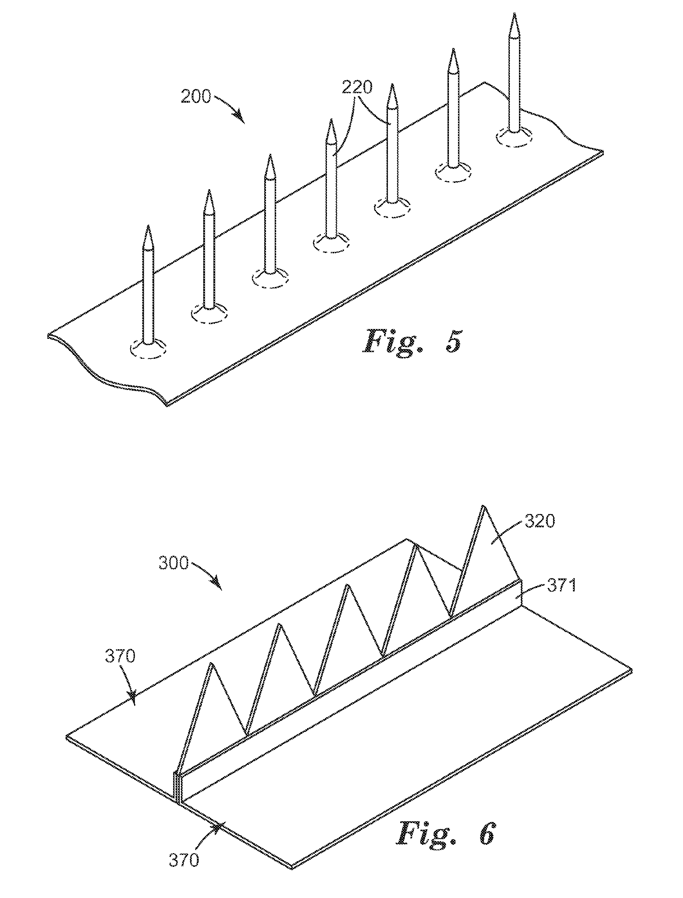

A different bird-repelling device (200) is shown in figure 5. In this embodiment the bird-repellent member is a separate part from the flexible sheet (210). The bird-repellent member comprises an array of spikes (220) attached to a flexible support. This support may be attached to the flexible sheet as described above (for example but not limited to adhesion or lamination etc) or the support itself may act as the flexible sheet described above.

A further embodiment of a bird-repellent device (300) as provided herein is represented in figure 6. Also in this embodiment the bird-repellent member is not an integral part of the flexible sheet (370) but is a separate part that is foldably attached to the sheet. The device represented in figure 6 shows a bird-repelling member in the form of a series of triangles (320) having a rectangular base (covered in figure 6 by the adhesives tapes (370) described below). Each side of the base of the bird-repelling member is covered by a portion of an adhesive tape (370). The adhesive tapes are folded on each side of the base to take up an L-shape, wherein one part (371) of the "L" is connected to the base of the bird-repelling member and the other part (370) of the "L" (perpendicular to the part that is attached to the base) can be connected to a flexible sheet (not shown in figure 6). This way the adhesives tapes form a support which connects the bird-repelling member with a flexible sheet in a foldable manner. Alternatively, the adhesive tapes (370, 371) may form the flexible sheet themselves and no further material may be necessary to make up the bird-repelling device. Such embodiment is an adhesive tape further containing a bird-repelling member as described above. The bird-repelling member may be folded into the plane made up by the part of the adhesive tape unconnected to the base of the bird-repelling member and the tape can be wound up into a roll for storage. The tape typically contains a releasable liner on its adhesive part that is not connected to the base of the bird repelling member such that the tape can be wound up without the adhesive interfering. The release liner is removed before the tape is attached to the structure.

Figure 6 shows the bird-repellent member (i.e., triangles 320) folded upwards, i.e. in the bird-repelling position. The bird repelling member can be brought into the "flat position" by moving it into direction of the part of the adhesive tape that is not connected to the base of the bird-repelling member.

### Examples

### Example 1: Preparation of the device shown in figure 1.

A strip of a clear polyester (PET) sheet (Pütz GmbH & Co. Folien KG, 12 cm long, 7 cm wide and 250 µm thick) was placed flat on a working bench. One side of the PET sheet was incised with a carpet knife to generate two parallel straight incisions (the "lateral incisions"), each line positioned 1 cm away from the edge of the sheet and running parallel to its length. The PET sheet was turned over and a straight line was incised by a carpet knife in the middle (6 cm away from the lateral edges) of the sheet running parallel to its length ("central incision"). The incisions were not deep enough to cut the sheet into halves. Diamonds were drawn on the upper surface of the PET sheet using the central incision as inversion axis of the two triangles making up the diamonds. The diamonds had the following dimensions:
Length (from tip to tip): 5 cm
Width (widest part): 2.5 cm
Distance between the widest parts of diamonds along the central incision: 4 mm

In a next step the diamonds were cut out with a carpet knife. Two 6 mm wide strips of black butyl rubber sealant tape with liner (SCOTCH-WELD 5313, 3M Deutschland GmbH), were adhered with their adhesive side on the 1 cm wide section between the edges of the sheet and the lateral incisions on the plane of the sheet (shown in figure 1). The thus prepared device was then wound up by hand into a roll as shown in figure 2.

For applying the device onto a structure the roll was unwound and the device was brought into the flat position. The device was then folded along the central incision by pushing the lateral ends of the sheet together such that the section between the cut-outs project upwards. The emerged projections had an approximately 4 mm wide plateau on their ends. The device was then folded again, this time around the two lateral incisions to form a foot on which the device can rest more steadily (as shown in figure 3). The device was then fixed onto a wooden pole by removing the release liner from the adhesive strips and pressing the device onto the wooden surface (as shown in figure 4).

### Example 2: Preparation of the device as shown in figure 6

A 5 cm wide, 20 cm long and 200 µm thick sheet was cut out from a clear PVC foil (Impega, Germany). A sequence of lined-up triangles having a height of 3.5 cm and a length of 5 cm were cut out using a pair of scissors, leaving a rectangular edge at the bottom of the triangles of approximately 1.5 cm height and 5 cm length - referred to as the "base" (see figure 6) for forming the bird repelling member.

In a next step two 20 cm long strips of a 5 cm wide fine line tape (SCOTCH TAPE 4737T, 3M Deutschland GmbH, Germany) were cut off from the tape. 1.5 cm wide liner pieces were removed along the entire length of both tape strips. The two tapes were attached by their 1.5 cm wide strips of uncovered adhesive to each side of the base of the PVC strip. A kink was then made into each of the backings of the adhesive tape strips and the parts of the tapes not attached to the base were bent away from the bases into a position substantially perpendicular to it. The remaining liner was removed from the tapes and the tapes were attached along the length approximately in the middle of a sheet of clear polyester film (Pütz GmbH & Co. Folien KG, 20 cm long, 8 cm wide and 250 µm thick). The bird repelling member were moved into the plane of the sheet by bending the bird-repelling member to the left or right and the sheet was then wound up into a roll. In an alternative embodiment the remaining liner of the adhesives tape strips was not removed. The bird repelling member was put into the flat position by folding it into the plane made up by the parts of the adhesive tapes that were not attached to the base of the bird repelling member and the tapes were wound up to form a roll for storing the device. For attaching the device onto a structure the device was unwound. The remaining liner was removed, and the device was adhered to a wooden pole.

## Claims

1. A device for repelling birds comprising a flexible sheet having an upper surface and opposite thereto a lower surface, a length, a width and a plane defined by its length and width, the sheet further containing in its plane a bird repelling member defined by a plurality of projections separated by a plurality of cut-out sections, wherein when the device is flat, the projections lie substantially within the plane of the sheet or substantially parallel to it and wherein when the device is bent out of its flat position in the width direction along the length of the sheet, the projections project at an angle relative to the plane of the sheet in its flat position.

2. The device of claim 1 wherein the cut-out sections are diamond-shaped.

3. The device according to claim 2 wherein the cut-outs sections are arranged in a straight line.

4. The device according to any one of the preceding claims further comprising an adhesive on the lower surface of the sheet.

5. The device according to claim 4 wherein the adhesive is activated by pressure, by heat or by moisture.

6. The device according to any one of the preceding claims wherein the sheet comprises polymeric material.

7. A device for repelling birds comprising a flexible sheet having an upper surface and opposite thereto a lower surface, a length, a width and a plane defined by its width and length, the sheet further comprising a bird-repelling member comprising a plurality of projections, the bird-repelling member being moveably joined to the sheet such that the projections can be moved from a position wherein the projections are substantially within the plane of the sheet or parallel to it into a position wherein at least a fraction of the projections are substantially perpendicular to the plane of the sheet.

8. The device according to claim 7 wherein the bird-repelling member is joined to the sheet such that the bird-repelling member can be folded into the position wherein at least a fraction of projections are substantially perpendicular to the plane of the sheet.

9. The device according to any one of claim 7 wherein the bird-repelling member is moveably joined to the sheet by a hinge or a fold.

10. The device according to any one of the preceding claims wherein the projections have the shape of spikes, prongs, teeth, triangles, pyramids, truncated pyramids, or a combination thereof.

11. The device according to any one of the preceding claims wherein the projections are arranged next to each other forming a straight line.

12. The device according to any one of claims wherein the projections comprise a polymeric material.

13. The device according to any one of the preceding claims wherein the flexible sheet is an adhesive tape.

14. The device according to any one of the preceding claims wound-up to a roll.

15. A method of storing a device according to any one of claims 1 to 13, comprising bringing the projections into a position substantially within the plane of the sheet or parallel to it, and winding up the sheet to form a roll.
